# EUROPEAN PATENT SPECIFICATION

(11) **EP 3 116 300 B1**
(45) Date of publication and mention of the grant of the patent: **01.05.2019**
(21) Application number: 15761559.2
(22) Date of filing: 13.03.2015
(51) Int. Cl.: A01G 23/081, A01G 23/083

(54) **ENERGY WOOD GRAPPLE**
ENERGIEHOLZGREIFER
GRAPPIN À BOIS DE FEU

(30) Priority: 14.03.2014 FI 20145236
(43) Date of publication of application: 18.01.2017
(73) Proprietor: Koponen, Tenho, 41560 Säkinmäki (FI)
(72) Inventor: Koponen, Tenho, 41560 Säkinmäki (FI)
(74) Representative: Helke, Kimmo Kalervo
(86) International application number: PCT/FI2015/050161
(87) International publication number: WO 2015/136155

(56) References cited:
- WO-A1-00/13485
- CA-A1- 2 244 540
- FI-C- 88 853
- FI-C- 94 227
- JP-A- H06 113 687
- US-A- 3 981 336
- US-A- 4 144 918

## Description

The invention relates to an energy wood grapple that includes a frame, a clamp fitted to the frame, which delimits the jaw together with the frame, as well as delimbing equipment including a delimbing knife.

For example, energy wood grapples that can be used to fall standing trees and move them to a desired location after falling have been manufactured for excavators. At its simplest, a sharpened counter blade has been added to a timber grapple. When closing the clamp, a tree trunk is pressed against the counter blade, being cut at the same time. After cutting, the tree trunk is controlled by the clamp and can be moved to a desired location. Several tree trunks can be taken in the energy wood grapple at the same time.

Generally, when collecting energy wood, it is sufficient to cut the tree and pile it for collection. In other words, the tree is cut at the base and is moved away to a pile for collection. Regarding larger trees, particularly the base part can be utilised to cut firewood instead of being chipped. Therefore, delimbing equipment has been added to the energy wood grapple for delimbing a tree. Thus, a tree, particularly its base part, can be delimbed while standing before falling it. In this way, the top part can be collected in an energy wood pile and the base part can be later used for cutting firewood, for example.

However, known delimbing equipment is difficult and slow to use. In addition, it easily creates dents in adjacent trees that are to be left standing deteriorating the trees' preconditions for growth and may even cause the trees to die. In practice, known delimbing equipment protrudes from the basic grapple thus increasing the outer dimensions of the energy wood grapple and simultaneously being susceptible to dents. US4144918A discloses a mobile tree harvester including a shear mounted at the base of a harvesting frame for shearing a tree trunk, a grip arm pivotably mounted to the frame above the shear for gripping the tree trunk and delimbers mounted above the grip arms for removing branches from the trunk. CA2244540A1 discloses a tree prosessor unit for felling, delimbing and bucking trees.

The object of the invention is to provide a novel energy wood grapple, which is simpler in design than heretofore and has better applicability than before. The characteristic features of the energy wood grapple according to the invention are set forth in the appended claim 1. The delimbing equipment is simple and its effect on the total mass of the energy wood grapple is negligent. In particular, the use of the delimbing equipment is easy and the delimbing result is good. In addition, damage to standing trees caused by delimbing equipment can be completely avoided. Due to the new and surprising design, the delimbing equipment can also be easily retrofitted as a separate accessory.

The invention is described below in detail by referring to the appended drawings, which illustrate an embodiment of the invention, in which:
- Figure 1a: illustrates a front view of a known energy wood grapple of the applicant,
- Figure 1b: illustrates the energy wood grapple according to the invention as shown in figure 1a,

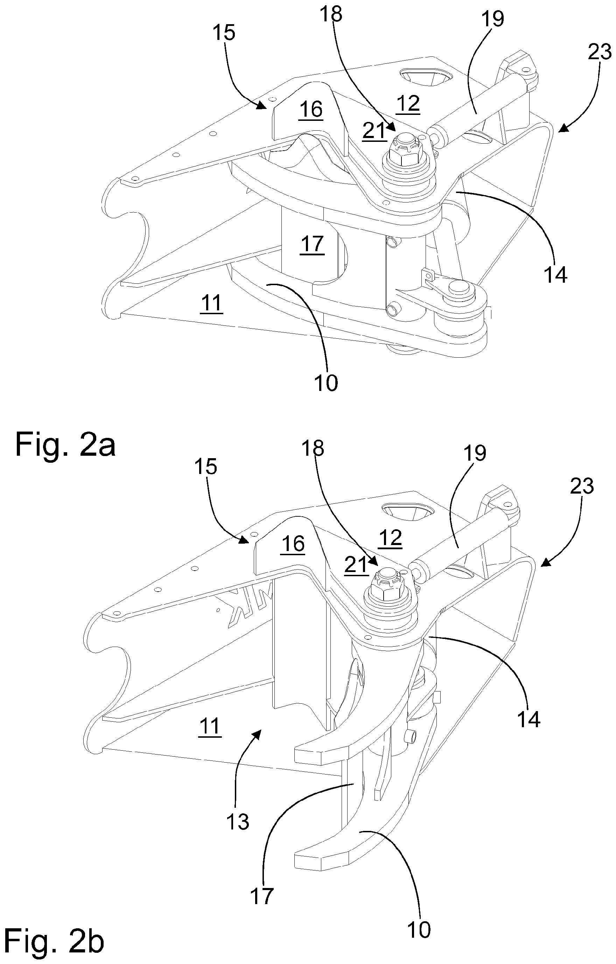

- Figure 2a: illustrates the energy wood grapple according to the invention with the clamp closed,
- Figure 2b: illustrates the energy wood grapple according to the invention with the clamp open,
- Figure 3a: illustrates the energy wood grapple according to the invention with the clamp open and the delimbing knife in the working motion,
- Figure 3b: illustrates the energy wood grapple according to the invention with the clamp open and the delimbing knife at the end of its working motion,
- Figure 4a: illustrates a top view of the condition of figure 2b,
- Figure 4b: illustrates a top view of the condition of figure 3b,
- Figure 5a: illustrates a basic view of the hydraulic connection of the energy wood grapple according to the invention,
- Figure 5b: illustrates an alternative embodiment of the energy wood grapple according to the invention.

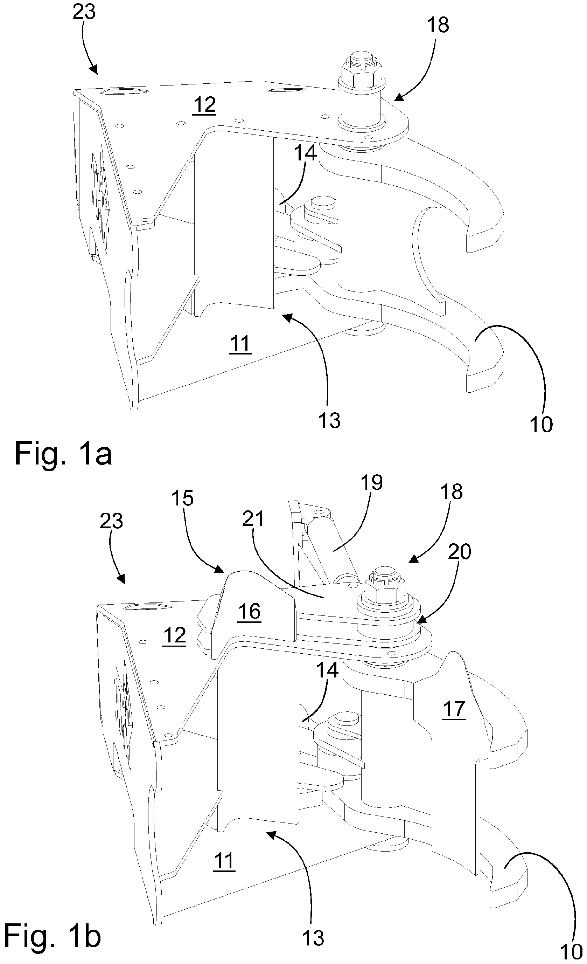

Figure 1a illustrates a known energy wood grapple being the own design of the applicant. In this case, a single-grip grapple is concerned, in which a tree is pressed against a knife 11 with one clamp 10. The clamp 10 delimits a jaw 13 together with a frame 12. The tree is pressed against an inclined blade being cut at the same time. The frame 12 of the energy wood grapple has a box-like design with the knife 11 forming a part of the box. Furthermore, the frame 12 has a triangular shape so that its outer dimensions are as small as possible while the jaw 13 is still adequately large even for big trees. At the narrow end of the frame, the energy wood grapple is rigidly fastened to the boom of an excavator, for example. In other words, a hanger known from harvesters is not used here. If necessary, an auxiliary frame measuring about one metre is used between the frame and the boom to increase the extendability.

The clamp 10 of a single-grip grapple is actuated by one cylinder 14, which is located within the box-like frame 12. In this way, the cylinder is well protected. At the same time, a cylinder that is short yet large can be used. Thus, the movement of the clamp can be made quick and simultaneously efficient for cutting even a thick tree.

In the invention, a delimbing knife 16 has been added to the energy wood grapple as delimbing equipment 15. Thus, the base parts of the biggest trees can be delimbed before falling. In figure 1b, the delimbing knife 16 is in the home position on top of the frame 12 at the edge of the jaw 13, however, outside the jaw 13. Thus, the delimbing knife does not increase the outer dimensions of the grapple in the lateral and longitudinal directions and also remains undamaged. At the same time, damage to adjacent trees is avoided. Thus, the delimbing knife does not affect the normal operation or use of the energy wood grapple and, in fact, it is only used when needed. The clamp 10 also has a profiled delimbing plate 17, which keeps the tree straight during delimbing. Furthermore, the top part of the delimbing plate 17 is profiled and chamfered, which ensures reliable cutting of branches.

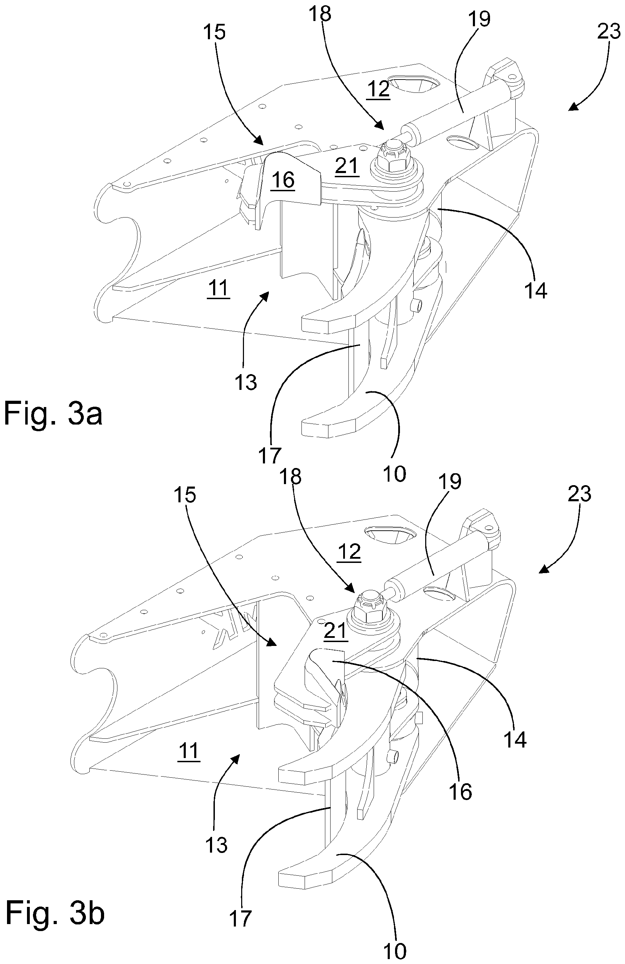

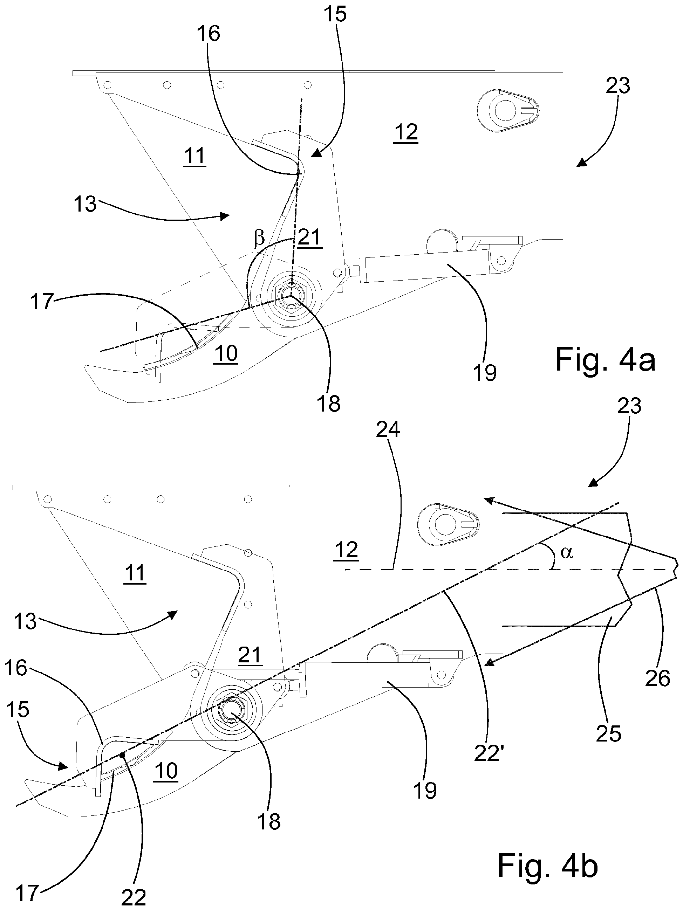

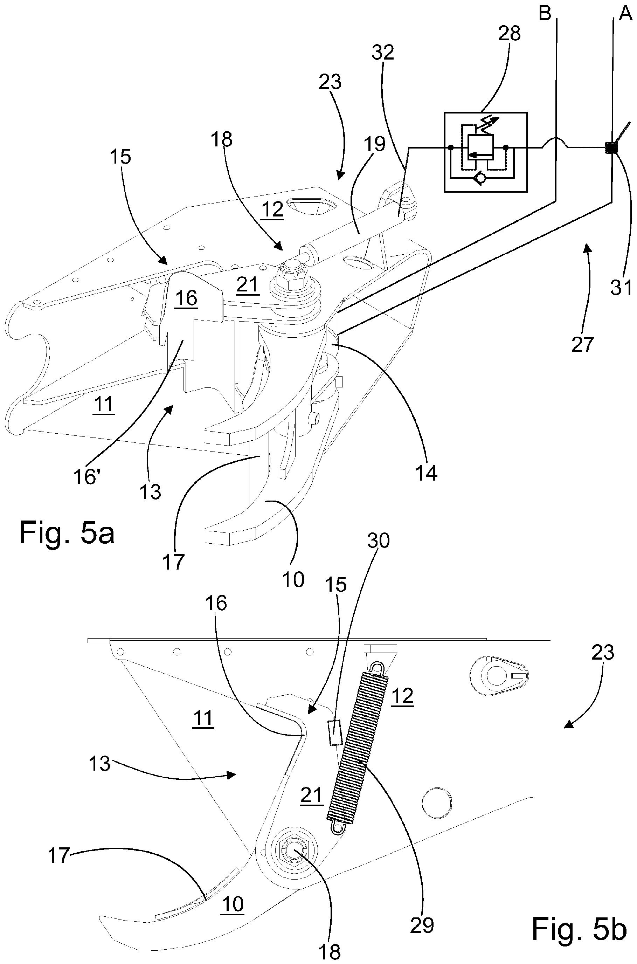

The delimbing knife is turnably pivoted to the frame. Advantageously, the same pivoting shaft 18 is used as in the clamp 10. In the known energy wood grapple of the applicant, the pivoting shaft was shorter than is shown in figure 1a. After development of the delimbing equipment, the pivoting shaft was lengthened to allow fastening the delimbing equipment to a basic grapple at a later stage. Utilisation of the pivoting shaft of the clamp simplifies the design and makes the movement ranges of the clamp and the delimbing knife congruent. Advantageously, the angle of rotation β of the delimbing knife 16 is between 100° and 120° (figure 4a). In this case, the delimbing knife extends sufficiently to cooperate with the clamp turned to the opened position, and, on the other hand, returns to the home position for protection. At the same time, an advantageously short hydraulic cylinder can be used. In the invention, the delimbing knife 16 is arranged to be loaded against the clamp 10 on the side of the jaw 13. In other words, the delimbing knife moves from the bottom of the jaw towards the clamp from the direction of the jaw. The delimbing knife includes a hydraulic cylinder 19, which is installed in the same circuit 27 with the cylinder of the clamp. The connection is provided with a sequence valve 28, which is opened when a pre-set pressure limit is exceeded (figure 5a). In practice, the clamp 10 is opened to a fully open position and the opening movement is continued, which increases the pressure in the circuit 27. Thus, the sequence valve 28 is opened and the delimbing knife 16 turns towards the opened clamp 10 (figure 3a). Before this, the open grabble has been placed at the base of the tree to be delimbed. Thus, the tree is pressed between the clamp and the delimbing knife. More generally, when the clamp is opened, the delimbing knife is closed, and when the clamp is closed, the delimbing knife is opened. In other words, the hydraulic cylinder of the delimbing knife and the cylinder of the clamp are connected crosswise relative to each other. Subsequently, the base part is delimbed by lifting the energy wood grapple with the boom. The hydraulic cylinder 19 is dimensioned for pressing the delimbing knife 16 and, in practice, it is smaller in size and lower in efficiency than the cylinder of the clamp. Thus, the delimbing knife can be pressed against the tree without risk of cutting. Even a low-efficiency hydraulic cylinder functions as a shock absorber preventing damage to the delimbing knife. If necessary, a hydraulic accumulator is used in the circuit.

In the desired position of the delimbed tree, the clamp is closed whereupon the delimbing knife moves away turning to the home position at the bottom of the jaw, on top of the frame. At the same time, the tree is cut and remains in the jaw pressed by the clamp. Thus, after delimbing, the tree can be cut without changing the grip. The top is removed from the energy wood grapple by opening the clamp and subsequently, the base part can be cut using the clamp. Due to the hydraulic connection proposed, the delimbing knife is controlled utilising the control of the clamp. Thus, no additional equipment is required for controlling a standard energy wood grapple, although the delimbing knife is installed in the frame. Thus, the delimbing knife can even be retrofitted in existing energy wood grapples. Such delimbing knife 16 includes a fixing detent

20 for fastening the delimbing knife 16 on the pivoting shaft 18 of the clamp 10 included in the energy wood grapple, as well as a cylinder 14 to be connected to the energy wood grapple. As the fixing detent, plate members 21 of the delimbing knife are provided with holes that fit in the bushing of the pivoting shaft 18. Advantageously, the cylinder 14 includes a hydraulic hose 32 equipped with a sequence valve 28 referred to above. Advantageously, the circuit 27 also includes a shut-off valve 31 for disconnecting the hydraulic cylinder 19 from the circuit 27. Thus, the energy wood grapple can be normally used without delimbing with the delimbing knife remaining reliably in the home position. The solution according to the invention can also be used in a double-grip grapple provided with two clamps. In this case, a delimbing knife is only installed in one clamp.

A part of the hydraulic connection of an energy wood grapple is shown in the figure. When the clamp is opened, pressurised hydraulic oil is supplied through the line A to the piston located on the rod side of the cylinder 14. This is the retract stroke of the cylinder. The hydraulic hose 32 of the hydraulic cylinder 19 is connected to the line A. Here, a shut-off valve 31 is also provided, with which the delimbing knife 16 can be disabled. The shut-off valve is a separate component or a part of the sequence valve. When the clamp 10 is fully open and the opening action is further continued, the pressure increases in the circuit 27 opening the pressure-controlled sequence valve 28 and allowing the hydraulic oil to flow behind the piston of the hydraulic cylinder 19 thereby effecting the extend stroke of the hydraulic cylinder. Thus, the delimbing knife 16 turns towards the clamp 10 and the tree trunk located therein. Thereafter, the tree can be delimbed by moving the energy wood grapple. At a suitable point of time, the line B is pressurised, whereupon the cylinder 14 of the clamp 10 performs the extend stroke, which, at the same time, returns the delimbing knife 16 to the home position. Thus, a single-acting hydraulic cylinder can be used. In figure 5a, the delimbing knife 16 is additionally provided with an extension 16' to guide the tree trunk during the delimbing.

The design and location of the delimbing knife enable replacing the hydraulic cylinder with a spring, for example. In the embodiment of figure 5b, the delimbing knife 16 includes a loading spring 29 for pressing the delimbing knife 16 against the clamp 10, as well as locking equipment 30 for locking the delimbing knife 16 in the home position. The spring is arranged to press the delimbing knife against the clamp. Unlike in figure 5b, the spring is in a tensioned state when the delimbing knife is in the home position. The delimbing knife returns to the home position on the bottom of the jaw pressed by the tree to be cut. Thus, the delimbing knife is locked in the home position with the spring being tensioned at the same time. When delimbing is needed, locking is released whereupon the spring turns the delimbing knife against the clamp and loads the delimbing knife against the clamp during the delimbing operation. Advantageously, the locking equipment is mechanically locked and it can be electrically released with a solenoid or, more generally, an electric magnet.

In the invention, the delimbing knife 16 and the clamp 10 are arranged to create a delimbing opening 20, which is elongated towards a fastening point 23 included in the frame 12. Advantageously, the angle α between the longitudinal axis 22' of the delimbing opening 22 and the longitudinal axis 24 of the frame 12 is below 30°. A boom or an auxiliary frame 25, which is parallel to the boom and equal to the direction of the longitudinal axis 24 of the frame 12, is connected to the fastening point. Normally, the operator of an excavator or other similar machine is also essentially in the direction of the boom extension and the operator's field of view 26 is in the same direction. Due to the elongated delimbing opening and particularly its orientation, positioning of the energy wood grabble requires less operator attention and intervention compared to prior art. In other words, the delimbing knife allows an angle difference larger than before between the frame of the energy wood grapple and the tree. Thus, delimbing can be carried out with fewer movements for controlling the perpendicularity of the energy wood grapple than before. The same is accomplished when the energy wood grabble is lifted up. While the tree and the excavator remain in place during the lifting movement, the tree is bent, when the length of the boom remains essentially the same. Thus, it is avoided that the delimbing knife cuts the tree. At the same time, the delimbing efficiency and result remain good although the tree is delimbed faster than before.

Due to its light weight, the energy wood grabble according to the invention is suitable to excavators as small as five tons but can also take up stresses generated by 20-ton excavators. An energy wood grapple is convenient and efficient. The cutting efficiency is sufficient for cutting a tree with a trunk as thick as thirty centimetres. The knife forms a part of the bottom plate of the box-like frame. In this way, a wear- and torsion-resistant knife can be achieved. In addition, due to the proposed design, the thickness of the bottom plate forming the knife is only about 10 mm. A thin knife can easily penetrate even a thick tree trunk and, in addition, the V-shape jaw keeps a firm grip on the tree trunk.

## Claims

1. Energy wood grapple that includes a frame (12), a clamp (10) fitted in the frame (12), which delimits a jaw (13) together with the frame (12), as well as delimbing equipment (15) including a delimbing knife (16), wherein the delimbing knife (16) is arranged to be loaded against the clamp (10) on the side of the jaw (13).

2. Energy wood grapple according to claim 1, **characterised in that** the delimbing knife (16) and the clamp (10) are arranged to form a delimbing opening (22), which is elongated towards a fastening point (23) included in the frame (12).

3. Energy wood grapple according to claim 2, **characterised in that** the angle α between the longitudinal axis (22') of the elongated delimbing opening (22) and the longitudinal axis (24) of the frame (12) is below 30°.

4. Energy wood grapple according to any of claims 1 to 3, **characterised in that** the clamp (10) includes a pivoting shaft (18) on which the delimbing knife (16) is pivoted.

5. Energy wood grapple according to any of claims 1 to 4, **characterised in that** the delimbing knife (16) has a home position, in which the delimbing knife (16) is at the edge of the jaw (13).

6. Energy wood grapple according to any of claims 1 to 5, **characterised in that** the delimbing knife (16) is fitted on the outer surface of the frame (12).

7. Energy wood grapple according to any of claims 1 to 6, **characterised in that** the delimbing knife (16) includes a hydraulic cylinder (19), which is connected to the same circuit (27) with the cylinder (14) of the clamp (10).

8. Energy wood grapple according to claim 7, **characterised in that** the efficiency of the hydraulic cylinder (19) is lower than that of the cylinder (14) of the clamp (10), in order to press the delimbing knife (16) against the clamp (10).

9. Energy wood grapple according to claim 7 or 8, **characterised in that** the circuit (27) includes a shut-off valve (31) for disconnecting the hydraulic cylinder (19) from the circuit (27).

10. Energy wood grapple according to any of claims 7 to 9, **characterised in that** the hydraulic cylinder (19) includes a hydraulic hose (32) equipped with a sequence valve (28).

11. Energy wood grapple according to any of claims 1 to 6, **characterised in that** the delimbing knife (16) includes a loading spring (29) for pressing the delimbing knife (16) against the clamp (10), as well as locking equipment (30) for locking the delimbing knife (16) in the home position.

12. Energy wood grapple according to claims 1 to 11, **characterised in that** one clamp (10) and one delimbing knife (16) are fitted in the frame (12).

13. Energy wood grapple according to claims 1 to 12, **characterised in that** the angle of rotation β of the delimbing knife (16) is between 100° and 120°.

## Patentansprüche

1. Energieholzgreifer, der einen Rahmen (12), eine in den Rahmen (12) eingepasste Greifzange (10), die eine Backe (13) zusammen mit dem Rahmen (12) begrenzt, sowie eine Entastungsvorrichtung (15) mit einem Entastungsmesser (16) umfasst, wobei das Entastungsmesser (16) so angeordnet ist, dass es gegen die Greifzange (10) auf der Seite der Backe (13) geladen wird.

2. Energieholzgreifer gemäß Patentanspruch 1, **dadurch gekennzeichnet, dass** das Entastungsmesser (16) und die Greifzange (10) zu einer Entastungsöffnung (22) angeordnet sind, die zu einem im Rahmen (12) enthaltenen Befestigungspunkt (23) hin verlängert ist.

3. Energieholzgreifer gemäß Patentanspruch 2, **dadurch gekennzeichnet, dass** der Winkel α zwischen der Längsachse (22') der länglichen Entastungsöffnung (22) und der Längsachse (24) des Rahmens (12) unter 30° liegt.

4. Energieholzgreifer gemäß einem der Patentansprüche 1 bis 3, **dadurch gekennzeichnet, dass** die Greifzange (10) eine schwenkbare Welle (18) aufweist, auf der das Entastungsmesser (16) schwenkbar ist.

5. Energieholzgreifer gemäß einem der Patentansprüche 1 bis 4, **dadurch gekennzeichnet, dass** das Entastungsmesser (16) eine Ausgangsposition aufweist, in der sich das Entastungsmesser (16) am Rand der Backe (13) befindet.

6. Energieholzgreifer gemäß einem der Patentansprüche 1 bis 5, **dadurch gekennzeichnet, dass** das Entastungsmesser (16) an der Außenfläche des Rahmens (12) angebracht ist.

7. Energieholzgreifer gemäß einem der Patentansprüche 1 bis 6, **dadurch gekennzeichnet, dass** das Entastungsmesser (16) einen Hydraulikzylinder (19) umfasst, der mit dem Zylinder (14) der Greifzange (10) mit dem gleichen Kreislauf (27) verbunden ist.

8. Energieholzgreifer gemäß dem Patentanspruch 7, **dadurch gekennzeichnet, dass** der Wirkungsgrad des Hydraulikzylinders (19) geringer ist als der des Zylinders (14) von der Greifzange (10), um das Entastungsmesser (16) gegen die Greif zange (10) zu drücken.

9. Energieholzgreifer gemäß dem Patentanspruch 7 oder 8, **dadurch gekennzeichnet, dass** der Kreislauf (27) ein Absperrventil (31) zum Trennen des Hydraulikzylinders (19) vom Kreislauf (27) beinhaltet.

10. Energieholzgreifer gemäß einem der Patentansprüche 7 bis 9, **dadurch gekennzeichnet, dass** der Hydraulikzylinder (19) einen Hydraulikschlauch (32) umfasst, der mit einem Zuschaltventil (28) ausgestattet ist.

11. Energieholzgreifer gemäß einem der Patentansprüche 1 bis 6, **dadurch gekennzeichnet, dass** das Entastungsmesser (16) eine Druckfeder (29) zum Andrücken des Entastungsmessers (16) gegen die Greifzange (10) sowie eine Verriegelungseinrichtung (30) zum Verriegeln des Entastungsmessers (16) in der Ausgangsposition umfasst.

12. Energieholzgreifer gemäß den Patentansprüchen 1 bis 11, **dadurch gekennzeichnet, dass** in den Rahmen (12) eine Greifzange (10) und ein Entastungsmesser (16) eingebaut sind.

13. Energieholzgreifer gemäß den Patentansprüchen 1 bis 12, **dadurch gekennzeichnet, dass** der Drehwinkel β des Entastungsmessers (16) zwischen 100° und 120° liegt.

## Revendications

1. Grappin à bois de feu qui comprend un cadre (12), une pince (10) agencée dans le cadre (12), laquelle délimite une mâchoire (13) ensemble avec le cadre (12), ainsi que des moyens d'ébranchage (15) comprenant un couteau d'ébranchage (16), où le couteau d'ébranchage (16) est disposé de sorte à être serré contre la pince (10) du côté de la mâchoire (13).

2. Grappin à bois de feu selon la revendication 1, **caractérisé en ce que** le couteau d'ébranchage (16) et la pince (10) sont disposés de sorte à former une ouverture d'ébranchage (22), qui est allongée vers un point de fixation (23) compris dans le cadre (12).

3. Grappin à bois de feu selon la revendication 2, **caractérisé en ce que** l'angle α entre l'axe longitudinal (22') de l'ouverture d'ébranchage allongée (22) et l'axe longitudinal (24) du cadre (12) est inférieur à 30°.

4. Grappin à bois de feu selon l'une quelconque des revendications 1 à 3, **caractérisé en ce que** la pince (10) comprend un arbre pivotant (18) auquel le couteau d'ébranchage (16) est attaché par pivot.

5. Grappin à bois de feu selon l'une quelconque des revendications 1 à 4, **caractérisé en ce que** le couteau d'ébranchage (16) a une position de repos, dans laquelle le couteau d'ébranchage (16) est sur le bord de la mâchoire (13).

6. Grappin à bois de feu selon l'une quelconque des revendications 1 à 5, **caractérisé en ce que** le couteau d'ebranchage (16) est agencé sur la surface extérieure du cadre (12).

7. Grappin à bois de feu selon l'une quelconque des revendications 1 à 6, **caractérisé en ce que** le couteau d'ébranchage (16) comprend un vérin hydraulique (19), qui est relié au même circuit (27) que le vérin (14) de la pince (10).

8. Grappin à bois de feu selon la revendication 7, **caractérisé en ce que** le rendement du vérin hydraulique (19) est inférieur à celui du vérin (14) de la pince (10), pour presser le couteau d'ébranchage (16) contre la pince (10).

9. Grappin à bois de feu selon la revendication 7 ou 8, **caractérisé en ce que** le circuit (27) comprend un robinet d'arrêt (31) pour déconnecter le vérin hydraulique (19) du circuit (27).

10. Grappin à bois de feu selon l'une quelconque des revendications 7 à 9, **caractérisé en ce que** le vérin hydraulique (19) comprend un tuyau hydraulique (32) équipé d'une soupape de séquence (28).

11. Grappin à bois de feu selon l'une quelconque des revendications 1 à 6, **caractérisé en ce que** le couteau d'ébranchage (16) comprend un ressort de charge (29) pour presser le couteau d'ébranchage (16) contre la pince (10) ainsi que des moyens de verrouillage (30) pour verrouiller le couteau d'ébranchage (16) dans la position de repos.

12. Grappin à bois de feu selon les revendications 1 à 11, **caractérisé en ce qu'**une pince (10) et un couteau d'ébranchage (16) sont agencés dans le cadre (12).

13. Grappin à bois de feu selon les revendications 1 à 12, **caractérisé en ce que** l'angle de rotation β du couteau d'ébranchage(16) est compris entre 100° et 120°.
